# EUROPEAN PATENT APPLICATION

(11) **EP 4 838 647 A1**
(43) Date of publication of application: **11.11.2026**
(21) Application number: 26175742.1
(22) Date of filing: 30.04.2026
(51) Int. Cl.: H01M 50/15, H01M 50/103, H01M 50/188, H01M 50/553

(54) **LID ASSEMBLY AND CELL**

(30) Priority: 09.05.2025 CN 202510596516; 22.09.2025 CN 202522035299 U
(71) Applicant: AESC Japan Ltd., Yokohama-shi, Kanagawa 220-0012 (JP)
(72) Inventor: CHEN, Hu, 214443 Jiangyin City, Wuxi City (TW)
(74) Representative: Becker, Eberhard

(57) **Abstract**

A lid assembly and a cell are provided. The lid assembly includes a lid, an insulating portion, and an electrode terminal. The lid includes a lid base and a first fixing portion and is provided with a mounting hole penetrating in a first direction, which is a thickness direction of the lid base. The lid base includes a first surface and a second surface disposed opposite to each other, and the first fixing portion extends from the first surface in a direction away from the lid base. The electrode terminal at least partially passes through the mounting hole and includes an electrode terminal base and a protruding portion. At least one of an edge of the protruding portion and the first fixing portion is provided with a thinning structure. The insulating portion is connected at least between the first fixing portion and the protruding portion.

## Description

### BACKGROUND

### Technical Field

The disclosure relates to the field of battery technology, and particularly, relates to a lid assembly and a cell.

### Description of Related Art

The cost competition in lithium batteries is intensifying. In a lithium battery, the lid assembly of a cell is a key component, and the costs of the lid assembly directly affect the overall costs of the lithium battery.

The lid assembly includes a lid base and an electrode terminal penetrating through and connected to the lid base. In order to ensure reliable connection between the electrode terminal and the lid base and to achieve the insulating and sealing performance that meets process requirements, a relatively large number of components are disposed between the lid base and the electrode terminal. As such, the lid assembly requires higher material costs, and the assembly efficiency is also adversely affected.

### SUMMARY

### Technical problem

In view of the above, the disclosure aims to provide a lid assembly and a cell to at least partially solve the problem of high costs of the lid assembly.

### Solution to Problem

Based on the above purpose, the first aspect of the disclosure provides lid assembly including a lid, an insulating portion, and an electrode terminal. The electrode terminal and the lid are connected through the insulating portion. The lid includes a lid base and a first fixing portion and is provided with a mounting hole penetrating in a first direction. The lid base includes a first surface and a second surface disposed opposite to each other in the first direction, and the first fixing portion extends from the first surface in a direction away from the lid base in the first direction. The first direction is a thickness direction of the lid base. The electrode terminal at least partially passes through the mounting hole, the electrode terminal includes an electrode terminal base and a protruding portion disposed circumferentially along an outer wall of the electrode terminal base, and at least one of an edge of the protruding portion and the first fixing portion is provided with a thinning structure. The insulating portion is connected at least between the first fixing portion and the protruding portion.

Optionally, a gap is provided between projections of the first fixing portion and the protruding portion in the first direction, and a minimum distance between the edge of the protruding portion and the first fixing portion is L₁, where L₁ ≥ 0.8 mm.

Optionally, along the first direction, a minimum distance between a first end and the protruding portion is H₃, where H₃ ≥ 0.8 mm, and along a second direction, a minimum distance between the first end and the protruding portion is L₃, where L₃ ≥ 0.2 mm, and the second direction is perpendicular to the first direction.

Optionally, the thinning structure includes a chamfer, a rounded chamfer, or a stepped structure.

Optionally, the thinning structure includes a first thinning structure disposed at the edge of the protruding portion, the first fixing portion further extends toward a direction of a central axis of the mounting hole, and a free end of the first fixing portion is provided with a second thinning structure.

Optionally, the first thinning structure and the second thinning structure are disposed opposite to each other, and a minimum distance between the first thinning structure and the second thinning structure is L₂, where L₂ ≥ 0.8 mm.

Optionally, a size of the first thinning structure in the first direction is H₁, a size of the protruding portion in the first direction is H₂, and a ratio of H₁ to H₂ is 0.2 to 0.8.

Optionally, the lid further includes a second fixing portion, and the second fixing portion extends at least from the second surface toward the direction of the central axis of the mounting hole. Along the first direction, the protruding portion is located between the first fixing portion and the second fixing portion, and projections of the protruding portion and the second fixing portion in the first direction overlap.

Optionally, along the first direction, at least a sealing portion is disposed between the protruding portion and the second fixing portion, and the insulating portion is connected to the sealing portion and fills the mounting hole.

Optionally, the insulating portion includes a first sub-portion, a second sub-portion, and a third sub-portion. The second sub-portion is at least partially located between the first fixing portion and the second fixing portion, the third sub-portion is at least partially located on a side of the first fixing portion away from the mounting hole, and the first sub-portion connects the second sub-portion and the third sub-portion. Along the first direction, at least a portion of the first sub-portion close to the electrode terminal base does not extend beyond an end portion of the electrode terminal base away from the second surface.

Based on the same inventive concept, in the second aspect, the disclosure further provides a cell including a housing, an electrode assembly, and the lid assembly according to the first aspect. The lid assembly is connected to the housing, and the electrode assembly is disposed in a space enclosed by the lid assembly and the housing.

### Technical effect

Based on the above, it can be seen that the lid assembly and the cell provided by the disclosure, through the insulating portion connected to both the first fixing portion and the protruding portion, can enable the electrode terminal and the lid to achieve an insulating connection. As such, the number of components of the lid assembly is effectively reduced, the metal material usage of the lid assembly is lowered, and that the material costs and weight of the lid assembly are decreased. At the same time, providing the thinning structure on at least one of the edge of the protruding portion and the first fixing portion can reduce the number of right-angle edges in contact with the insulating portion, so that the risk of damage or even fracture of the insulating portion is lowered. In addition, the space between the protruding portion and the first fixing portion and the thickness of the insulating portion between the protruding portion and the first fixing portion can be increased, so that the structural strength of the insulating portion is improved and the electrode terminal and the lid are ensured to form a reliable connection through the insulating portion.

### BRIEF DESCRIPTION OF THE DRAWINGS

In order to more clearly explain the technical solutions in the disclosure or related art, the drawings required in the description of the embodiments or related art are to be briefly introduced below. Obviously, the drawings described in the following paragraphs are merely embodiments of the disclosure. For a person having ordinary skill in the art, other drawings may be obtained based on these drawings without inventive labor.
FIG. 1 is a partial cross-sectional schematic view of a cell of a first structure according to an embodiment of the disclosure.
FIG. 2 is a partial schematic top view of a lid assembly of a second structure according to an embodiment of the disclosure.
FIG. 3 is a schematic cross-sectional view of a section A-A in FIG. 2.
FIG. 4 is an enlarged schematic view of a portion B in FIG. 3.
FIG. 5 is an enlarged schematic view of a lid assembly of a third structure at the portion B in FIG. 3 according to an embodiment of the disclosure.
FIG. 5a is an enlarged schematic view of a portion C in FIG. 5.
FIG. 6 is an enlarged schematic view of a lid assembly of a fourth structure at the portion B in FIG. 3 according to an embodiment of the disclosure.
FIG. 7 is a partial schematic view of a cell of the second structure according to an embodiment of the disclosure.

### DESCRIPTION OF THE EMBODIMENTS

In order to make the purpose, technical solutions, and advantages of the disclosure more clear and understandable, the disclosure is further described in detail in combination with specific embodiments and with reference to the accompanying drawings.

It should be noted that the relative arrangement of the components, the numerical expressions, and numerical values set forth in these embodiments do not limit the scope of the disclosure unless specifically stated otherwise.

Meanwhile, it should be understood that for ease of description, the dimensions of various parts shown in the drawings are not drawn according to actual proportional relationships.

The following description of at least one exemplary embodiment is merely illustrative in nature and is in no way intended to limit the disclosure and its application or uses in any way.

It should be noted that, unless otherwise defined, the technical terms or scientific terms used in the embodiments of the disclosure should be understood in the general sense by a person having ordinary skill in the art. The words "first", "second", and similar words used in the embodiments of the disclosure do not indicate any order, quantity, or importance, but are only used to distinguish different components. Words such as "include" or "contain" mean that the elements or objects appearing before the word cover the elements or objects listed after the word and their equivalents, without excluding other elements or objects. Words such as "connect" or "connected" are not limited to physical or mechanical connections, but may include electrical connections, whether direct or indirect. "Up", "down", "left", "right", etc. are only used to indicate relative positional relationships, and when the absolute position of the described object changes, the relative positional relationship may also change accordingly.

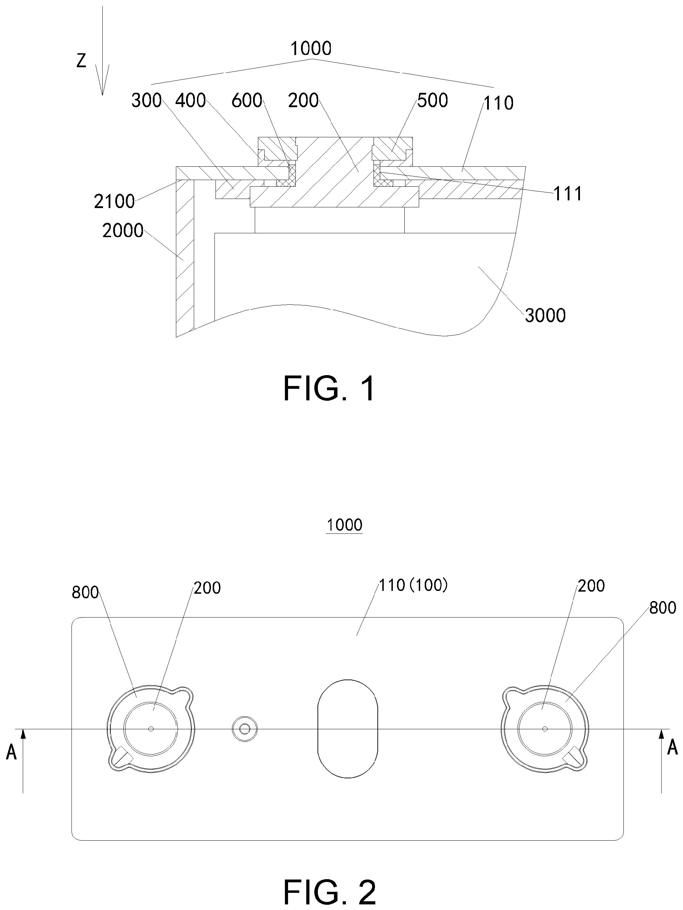

FIG. 1 shows a partial cross-sectional schematic view of a cell of a first structure.

As shown in FIG. 1, in some embodiments, a cell includes a lid assembly 1000 and a housing 2000. The lid assembly 1000 includes a lid base 110, and the lid base 110 is provided with a mounting hole 111 penetrating therethrough in a thickness direction (e.g., Z direction in FIG. 1) thereof. The lid base 110 covers and is connected to an opening end 2100 of the housing 2000, so that the lid base 110 and the housing 2000 together form a space for accommodating an electrode assembly 3000. A lower insulating member 300 is connected to a side of the lid base 110 close to the electrode assembly 3000, and an upper insulating member 400 is connected to a side of the lid base 110 away from the electrode assembly 3000. The lid assembly 1000 further includes an electrode terminal 200, and the electrode terminal 200 is fitted with a sealing ring 600 and passes through the lower insulating member 300, the lid base 110, and the upper insulating member 400. One end of the electrode terminal 200 away from the electrode assembly 3000 extends out of the upper insulating member 400 and is riveted to a riveting block 500. The electrode terminal 200 and the lid base 110 press the sealing ring 600, so as to seal between the electrode terminal 200 and the lid base 110 through the sealing ring 600 and insulate between the electrode terminal 200 and the lid base 110 through the upper insulating member 400 and the lower insulating member 300.

Based on the foregoing, in this embodiment, in order to achieve the insulating and sealing connection between the electrode terminal 200 and the lid base 110, it is necessary to sleeve the sealing ring 600 onto the electrode terminal 200 and connect the riveting block 500 to a top end of the electrode terminal 200. Since the riveting block 500 needs to be made of a metal material, not only is the material cost relatively high, but it also results in a relatively large overall weight of the lid assembly 1000.

In order to solve the above problems, in the embodiments of the disclosure, lid assemblies 1000 of other structures are provided.

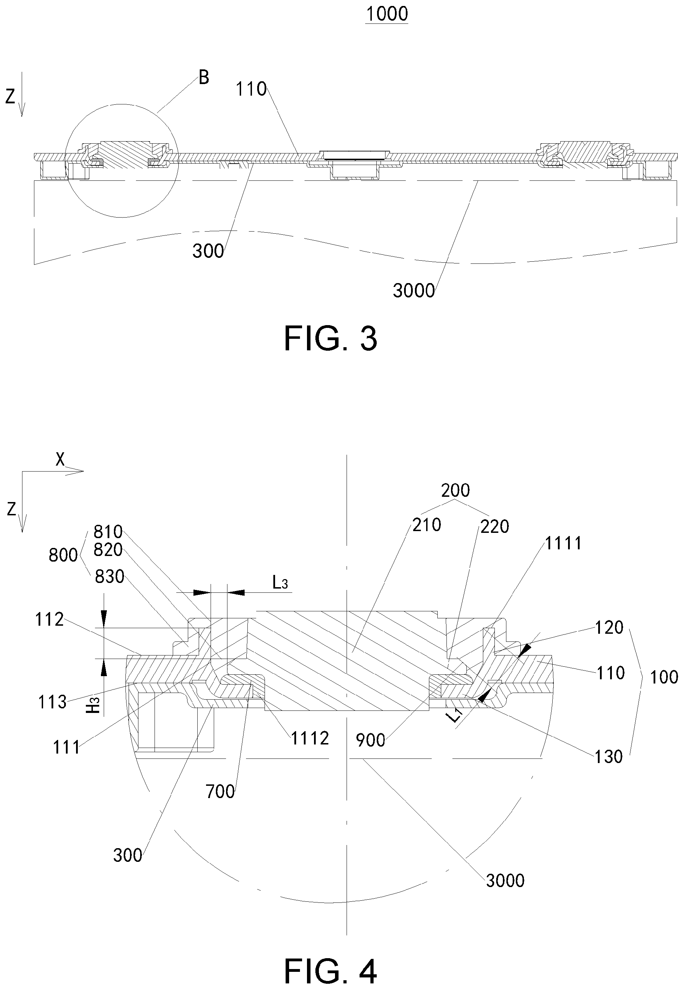

FIG. 2 shows a partial schematic top view of a lid assembly 1000 of a second structure, FIG. 3 shows a schematic cross-sectional view of a section A-A in FIG. 2, and FIG. 4 shows an enlarged schematic view of a portion B in FIG. 3.

As shown in FIG. 2, FIG. 3, and FIG. 4, in some embodiments, the lid assembly 1000 includes a lid 100, an insulating portion 800, and an electrode terminal 200, and the electrode terminal 200 and the lid 100 are connected through the insulating portion 800. The lid 100 includes a lid base 110 and a first fixing portion 120 and is provided with a mounting hole 111 penetrating therethrough in a first direction (Z direction in FIG. 4). The lid base 110 includes a first surface 112 and a second surface 113 disposed opposite to each other in the first direction, and the first fixing portion 120 extends from the first surface 112 in the first direction in a direction away from the lid base 110. The first direction is the thickness direction of the lid base 110. The electrode terminal 200 at least partially passes through the mounting hole 111 and includes an electrode terminal base 210 and a protruding portion 220 disposed circumferentially along an outer wall of the electrode terminal base 210. At least one of an edge of the protruding portion 220 and the first fixing portion 120 is provided with a thinning structure 900. The insulating portion 800 is at least connected between the first fixing portion 120 and the protruding portion 220.

It should be noted that the outer wall of the electrode terminal base 210 is disposed around a central axis of the electrode terminal 200 (as shown by the dash-dot line in FIG. 4). The free end of the first fixing portion 120 is the end portion of the first fixing portion 120 away from the lid base 110.

Exemplarily, the free end of the first fixing portion 120 encloses a first end 1111 of the mounting hole 111.

Exemplarily, the electrode terminal base 210 may be a cylinder with a circular cross-section (unless otherwise specified, the cross-sections in the following description are all cross-sections perpendicular to the central axis of the electrode terminal 200), or may be a cylinder with a polygonal cross-section.

Exemplarily, an outer contour shape of the cross-section of the protruding portion 220 and a cross-section shape of the electrode terminal base 210 may be the same or different.

Exemplarily, in the first direction, the protruding portion 220 may be disposed at a middle portion of the electrode terminal base 210 or at a position close to a bottom end portion (the bottom end portion of the electrode terminal base 210 is close to the second surface 113).

Exemplarily, in the first direction, a lid surface of the lid base 110 away from the first fixing portion 120 may be connected with a lower insulating member 300.

Exemplarily, a bottom end of the electrode terminal base 210 (i.e., the end close to the second surface 113) is used for electrical connection with a tab of the electrode assembly 3000, and the top end is used for electrical connection with an external circuit (e.g., a bus assembly or a sheet, etc.).

Exemplarily, a sealing portion 700 is connected between the electrode terminal 200 and the lid 100.

Exemplarily, the first fixing portion 120 and the lid base 110 may be connected by welding or integrally-formed connection.

When assembling the lid assembly 1000 of this embodiment, the assembled electrode terminal 200 may be inserted into the mounting hole 111. After the electrode terminal 200 moves in the first direction to a predetermined position within the mounting hole 111, the insulating portion 800 may be formed at least within the mounting hole 111 through an injection molding process. The protruding portion 220 and the first fixing portion 120 are connected through the insulating portion 800, so as to achieve relative fixation of the electrode terminal 200 and the lid 100, and a reliable connection is thereby formed.

Compared with the lid assembly 1000 of the first structure, in the lid assembly 1000 of the second structure, the riveting block 500 is at least omitted, and the functions of fixing the electrode terminal 200 and insulating the electrode terminal 200 from the lid 100 are achieved at the same time through the insulating portion 800 formed by injection molding. The electrode terminal 200 being no longer connected to the riveting block 500 may reduce the overall metal material usage of the lid assembly 1000, so material costs and weight are lowered, which is conducive to mass production.

Based on the foregoing, the insulating portion 800 is used to fix the electrode terminal 200, and if it fractures, especially the portion of the insulating portion 800 located between the protruding portion 220 and the first fixing portion 120, it may cause the connection between the electrode terminal 200 and the lid 100 to fail. When both the edge of the protruding portion 220 and the edge of the first fixing portion 120 are right-angle edges, on one hand, stress concentration may occur at the right-angle edges, and the insulating portion 800 connected to multiple right-angle edges is prone to damage or even fracture under greater stress. On the other hand, the outwardly protruding right-angle edges may also easily cause a spacing distance between the edge of the protruding portion 220 and the first fixing portion 120 to be relatively small, and a thickness of the insulating portion 800 located between the edge of the protruding portion 220 and the first fixing portion 120 is correspondingly small, which is also prone to damage or even fracture.

In order to avoid the above-mentioned problems, the thinning structure 900 is proved on at least one of the edge of the protruding portion 220 and the first fixing portion 120 in this embodiment. Compared with right-angle edges, by providing the thinning structure 900, not only may the right-angle edges be eliminated, but also a locally recessed structure may be formed on the edge of the protruding portion 220 and/or the first fixing portion 120, so the spacing distance between the edge of the protruding portion 220 and the first fixing portion 120 is increased, and that the thickness of the insulating portion 800 located between the edge of the protruding portion 220 and the first fixing portion 120 is correspondingly increased.

The lid assembly 1000 provided in this embodiment, through the insulating portion 800 connected to both the first fixing portion 120 and the protruding portion 220, may enable the electrode terminal 200 and the lid 100 to achieve an insulating connection. As such, the number of components of the lid assembly 1000 is effectively reduced, the metal material usage of the lid assembly 1000 is lowered, and that the material costs and weight of the lid assembly 1000 are decreased. At the same time, providing the thinning structure 900 on at least one of the edge of the protruding portion 220 and the first fixing portion 120 may reduce the number of right-angle edges in contact with the insulating portion 800, so that the risk of damage or even fracture of the insulating portion 800 is lowered. In addition, the space between the protruding portion 220 and the first fixing portion 120 and the thickness of the insulating portion 800 between the protruding portion 220 and the first fixing portion 120 may be increased, so that the structural strength of the insulating portion 800 is improved and the electrode terminal 200 and the lid 100 are ensured to form a reliable connection through the insulating portion 800.

As shown in FIG. 4, in some embodiments, a gap is provided between projections of the first fixing portion 120 and the protruding portion 220 in the first direction, and a minimum distance between the edge of the protruding portion 220 and the first fixing portion 120 is L₁, where L₁ ≥ 0.8 mm.

Exemplarily, L₁ may be 0.8 mm, 0.85 mm, 0.9 mm, 0.95 mm, or 1 mm.

It may be understood that, for the projection of the electrode terminal 200 in the first direction (hereinafter referred to as an electrode terminal projection), the protruding portion 220 is located on an outer periphery of the electrode terminal base 210, and the projection of the first fixing portion 120 in the first direction (hereinafter referred to as a first fixing portion projection) is spaced from the projection of the protruding portion 220 in the first direction, which indicates that the first fixing portion projection is spaced from the electrode terminal projection. In this way, the electrode terminal 200 may pass through the inner hole enclosed by the first fixing portion 120.

Before inserting the electrode terminal 200 into the mounting hole 111, the mounting hole 111 may be cleaned to ensure that no metal foreign objects are present inside the mounting hole 111. Afterwards, the electrode terminal 200 may be directly inserted into the mounting hole 111 through the inner hole enclosed by the first fixing portion 120. Subsequently, the insulating and sealing connection between the electrode terminal 200 and the lid 100 may be completed through the insulating portion 800. This may prevent metal foreign objects from being present inside the mounting hole 111, so that an electrical clearance and a creepage distance between the lid 100 and the electrode terminal 200 are increased, and the insulating performance of the lid assembly 1000 is improved, so that the safety performance of the cell using the lid assembly 1000 of this embodiment is improved.

If L₁ is excessively small, the spacing distance between the protruding portion 220 and the first fixing portion 120 is excessively small, and when the insulating portion 800 is formed through an over-injection molding process, even if the injection molding material fills the spacing space between the protruding portion 220 and the first fixing portion 120, the thickness of the insulating portion 800 ultimately formed between the protruding portion 220 and the first fixing portion 120 remains insufficient, and the insulating portion 800 at this location still has a risk of fracturing.

In order to avoid the above-mentioned problems, in this embodiment, L₁ is designed to satisfy L₁ ≥ 0.8 mm, which may allow a relatively sufficient spacing space between the protruding portion 220 and the first fixing portion 120. Further, correspondingly, the insulating portion 800 formed in the above-mentioned spacing space may also have a greater thickness, and as the structural strength of this portion of the insulating portion 800 is greater, the risk of fracturing of the insulating portion 800 is further reduced.

As shown in FIG. 4, in some embodiments, in the second direction (e.g., X direction in FIG. 4), a minimum distance between the first end 1111 and the protruding portion 220 is L₃, where L₃ ≥ 0.2 mm. The second direction is perpendicular to the first direction.

Exemplarily, L₃ may be 0.2 mm, 0.25 mm, 0.3 mm, 0.35 mm, 0.4 mm, 0.45 mm, or 0.5 mm.

If L₃ is excessively small, the spacing distance between the first end 1111 and the protruding portion 220 in the second direction is excessively small, and the width of the portion of the insulating portion 800 located between the first end 1111 and the protruding portion 220 is excessively small. During the assembly and use of the lid assembly 1000, the above-mentioned portion of the insulating portion 800 may also fracture under the combined action of the first end 1111 and the protruding portion 220.

To avoid the above problems, in this embodiment, L₃ is designed to satisfy L₃ ≥ 0.2 mm, so that the risk of fracturing of the insulating portion 800 is reduced, and the insulating performance, sealing performance, and structural strength of the insulating portion 800 are ensured. The electrical performance of the electrode terminal 200 is also improved, and the risk of thermal runaway of the cell is reduced.

As shown in FIG. 4, in some embodiments, in the first direction, a minimum distance between the first end 1111 and the protruding portion 220 is H₃, where H₃ ≥ 0.8 mm.

Exemplarily, H₃ may be 0.8 mm, 0.85 mm, 0.9 mm, 0.95 mm, 1 mm, 1.05 mm, 1.1 mm, 1.15 mm, or 1.2 mm.

The problems caused by H₃ being excessively small are similar to the problems caused by L₃ being excessively small, and the beneficial effects of designing H₃ to satisfy H₃ ≥ 0.8 mm are similar to the beneficial effects of designing L₃ to satisfy L₃ ≥ 0.2 mm, so description thereof is not repeated herein.

As shown in FIG. 4, in some embodiments, the thinning structure 900 includes a chamfer, a rounded chamfer, or a stepped structure.

By setting the thinning structure 900 as a chamfer, a rounded chamfer, or a stepped structure, a surface of the thinning structure 900 is relatively regular. In this way, the processing difficulty may be effectively reduced, it is easier to control dimensional accuracy, and the structural strength of the insulating portion 800 located between the protruding portion 220 and the first fixing portion 120 is ensured.

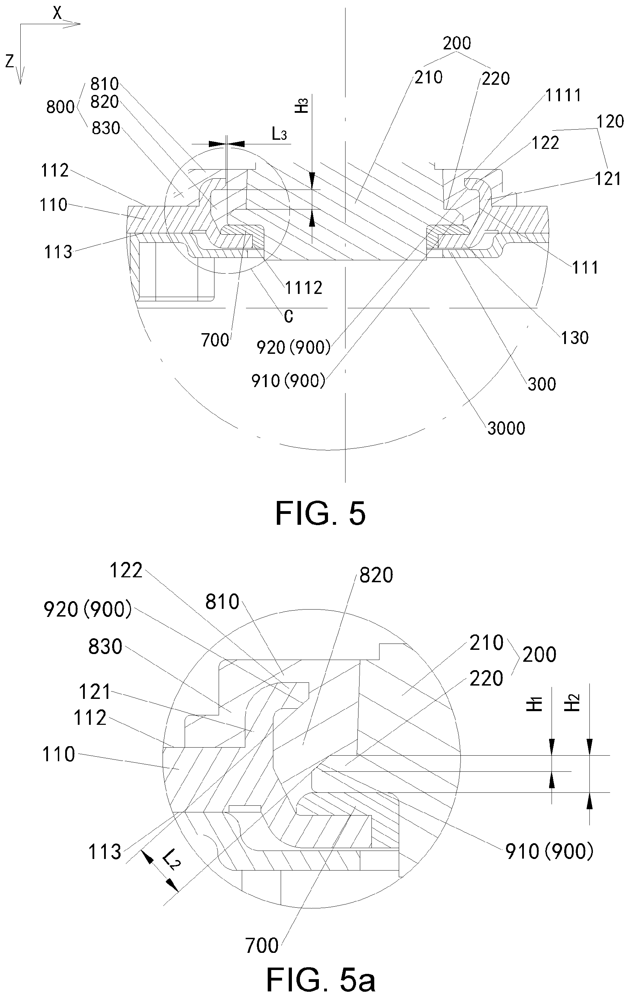

FIG. 5 shows an enlarged schematic view of a lid assembly 1000 of a third structure at the portion B in FIG. 3.

As shown in FIG. 5, in some embodiments, the thinning structure 900 includes a first thinning structure 910 disposed at the edge of the protruding portion 220. The first fixing portion 120 further extends toward a direction of a central axis of the mounting hole 111, and a free end of the first fixing portion 120 is provided with a second thinning structure 920.

A portion of the first fixing portion 120 close to the lid base 110 (hereinafter referred to as a first extending portion 121) extends from the first surface 112 in a direction away from the lid base 110, and a portion of the first fixing portion 120 close to its free end (hereinafter referred to as a second extending portion 122) extends toward the direction of the central axis of the mounting hole 111.

Exemplarily, the first extending portion 121 may include a cylindrical structure, and the second extending portion 122 may include an annular plate-shaped structure.

Exemplarily, the first extending portion 121 and the second extending portion 122 may be connected by welding or integrally-formed connection.

Exemplarily, the first thinning structure 910 may be formed by pressing or cutting a material of the protruding portion 220. The second thinning structure 920 may be formed by pressing or cutting a material of the first fixing portion 120. The structures of the second thinning structure 920 and the first thinning structure 910 may be the same or different.

Taking the structure and direction shown in FIG. 5 as an example for illustration, the second extending portion 122 of the first fixing portion 120 is at least used to limit the electrode terminal 200 in the first direction through the insulating portion 800. In order to ensure that a relatively reliable force may be provided to the protruding portion 220, the second extending portion 122 needs to be close to the protruding portion 220 in the second direction (the second direction is perpendicular to the central axis of the mounting hole 111, as shown in the X direction in FIG. 5).

Since the first extending portion 121 is connected to the second extending portion 122, correspondingly, the first extending portion 121 is also relatively close to the electrode terminal base 210. As such, the space between the first fixing portion 120 and the protruding portion 220 for accommodating the insulating portion 800 may be limited. In order to expand this space, the second thinning structure 920 is provided at the free end of the first fixing portion 120 in this embodiment. When the insulating portion 800 is formed by the injection molding process, more material for forming the insulating portion 800 may be accommodated in this space, so that the material thickness of the insulating portion 800 located between the protruding portion 220 and the first fixing portion 120 is relatively large, and the structural strength is also correspondingly large. As such, the insulating portion 800 is prevented from fracturing and reliable connection between the electrode terminal 200 and the lid 100 is ensured.

Further, arrangement of the first thinning structure 910 at the edge of the protruding portion 220 and the second thinning structure 920 at the free end of the first fixing portion 120 may ensure that neither the portion of the protruding portion 220 nor the portion of the first fixing portion 120 connected to the insulating portion 800 forms a right-angle edge, so that the risk of fracturing of the insulating portion 800 is further reduced.

FIG. 5a shows an enlarged schematic view of a portion C in FIG. 5.

As shown in FIG. 5 and FIG. 5a, in some embodiments, the first thinning structure 910 and the second thinning structure 920 are disposed opposite to each other, and a minimum distance between the first thinning structure 910 and the second thinning structure 920 is L₂, where L₂ ≥ 0.8 mm.

Exemplarily, L₂ may be 0.8 mm, 0.85 mm, 0.9 mm, 0.95 mm, or 1 mm.

If L₂ is excessively small, the spacing distance between the first thinning structure 910 and the second thinning structure 920 is excessively small, and when the insulating portion 800 is formed by an over-injection molding process, even if the injection molding material fills the spacing space between the first thinning structure 910 and the second thinning structure 920, the thickness of the insulating portion 800 ultimately formed between the first thinning structure 910 and the second thinning structure 920 is still insufficient, and the insulating portion 800 at this position still has a risk of fracturing.

In order to avoid the above-mentioned problems, in this embodiment, L₂ is designed to be L₂ ≥ 0.8 mm, which may allow a relatively sufficient spacing space between the first thinning structure 910 and the second thinning structure 920. Further, correspondingly, the insulating portion 800 formed in the above-mentioned spacing space may also have a relatively large thickness, so that the structural strength of this portion of the insulating portion 800 is relatively large, and that the risk of fracturing is further reduced.

As shown in FIG. 5 and FIG. 5a, in some embodiments, a size of the first thinning structure 910 in the first direction is H₁, a size of the protruding portion 220 in the first direction is H₂, and a ratio of H₁ to H₂ is 0.2 to 0.8.

Exemplarily, the ratio of H₁ to H₂ may be 0.2, 0.3, 0.4, 0.5, 0.6, 0.7, or 0.8.

If the ratio of H₁ to H₂ is excessively large, the thickness of the remaining material of the protruding portion 220 in the first direction excluding the first thinning structure 910 is excessively small, which may result in a relatively low structural strength of the protruding portion 220, and cracks or even fractures may easily occur at the connection between the protruding portion 220 and the electrode terminal base 210. If the protruding portion 220 and the electrode terminal base 210 are separated from each other, the electrode terminal base 210 may disengage from the mounting hole 111, causing safety issues with the cell. If the ratio of H₁ to H₂ is excessively small, then in order to ensure a relatively sufficient spacing distance between the first thinning structure 910 and the free end of the first fixing portion 120, it is necessary to increase an outer diameter of the first fixing portion 120 or increase a height extending in the direction away from the lid base 110. In this way, the lid base 110 may occupy excessively much space in the first direction, and the overall size of the cell in the first direction may be excessively large. When assembling a battery pack, a single cell may occupy a relatively large space within the battery pack, and the number of cells that the battery pack may accommodate may be smaller, resulting in a relatively low energy density of the battery pack.

In order to avoid the above-mentioned problems, the ratio of H₁ to H₂ is designed to be 0.2 to 0.8 in this embodiment. In this way, the structural strength of the protruding portion 220 is improved, a reliable connection is ensured to be formed between the protruding portion 220 and the electrode terminal base 210, the connection reliability between the electrode terminal 200 and the lid 100 is ensured, and safety issues are prevented from occurring in the cell. Further, overall size of the first fixing portion 120 is reduced, allowing the cell to occupy a relatively small space. As such, when the cell is used to form a battery pack, the energy density of the battery pack is improved.

As shown in FIG. 5, in some embodiments, the lid 100 further includes the second fixing portion 130, and the second fixing portion 130 extends from the second surface 113 at least in the direction of the central axis of the mounting hole 111. In the first direction, the protruding portion 220 is located between the first fixing portion 120 and the second fixing portion 130, and projections of the protruding portion 220 and the second fixing portion 130 in the first direction overlap.

It should be noted that the free end of the second fixing portion 130 encloses a second end 1112 of the mounting hole 111.

Exemplarily, the connection between the second fixing portion 130 and the lid base 110 may be welding or integrally-formed connection, and the connection manner between the second fixing portion 130 and the lid base 110 may be the same as or different from the connection manner between the first fixing portion 120 and the lid base 110.

In addition to the above-mentioned connection manners, the first fixing portion 120 and the second fixing portion 130 may form a single structural member through welding or integrally-formed connection, and the structural member is connected to the lid base 110 through welding or integrally-formed connection.

As shown in FIG. 5, the portion of the second fixing portion 130 close to the lid base 110 extends from the second surface 113 in the direction away from the first surface 112, and the portion of the second fixing portion 130 close to its free end extends in the direction of the central axis of the mounting hole 111. In this case, the second fixing portion 130 may protrude from the lid surface of the lid base 110 close to the electrode assembly 3000.

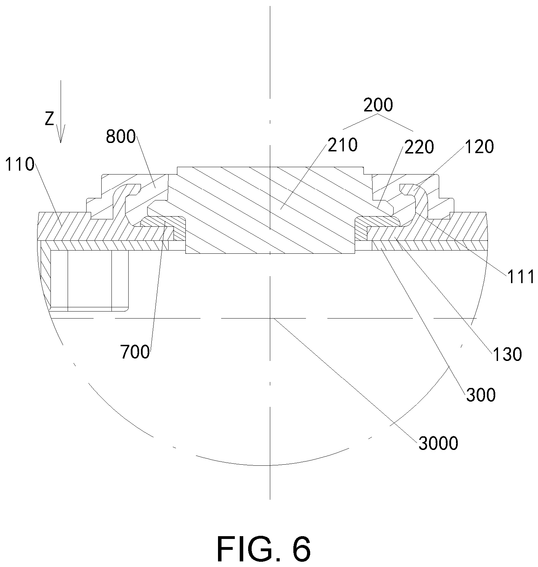

FIG. 6 shows an enlarged schematic view of a lid assembly 1000 of a fourth structure at the portion B in FIG. 3.

As shown in FIG. 6, in some embodiments, the second fixing portion 130 as a whole extends in the direction of the central axis of the mounting hole 111. In this case, the second fixing portion 130 may be flush with the lid surface of the lid base 110 close to the electrode assembly 3000.

It should be noted that the cross-sectional outer contour shapes of the inner hole enclosed by the first fixing portion 120, the inner hole enclosed by the second fixing portion 130, and the electrode terminal base 210 may be circular or polygonal, which are not limited herein.

It can be understood that in this embodiment, in the first direction, the projection of the second fixing portion 130 and the protruding portion 220 overlap, and therefore the electrode terminal 200 cannot pass through the inner hole enclosed by the second fixing portion 130.

Taking the structure and direction shown in FIG. 5 as an example for illustration, after the electrode terminal 200 is inserted into the mounting hole 111 from the side of the first fixing portion 120, the protruding portion 220 is located above the second fixing portion 130, and the protruding portion 220 is blocked and limited by the second fixing portion 130, so as to keep at least a portion of the electrode terminal 200 within the mounting hole 111. In this way, the risk of the electrode terminal 200 being disengaged from the mounting hole 111 is further reduced, and the connection reliability between the electrode terminal 200 and the lid 100 is improved.

As shown in FIG. 5 and FIG. 5a, in some embodiments, in the first direction, at least the sealing portion 700 is disposed between the protruding portion 220 and the second fixing portion 130, and the insulating portion 800 is connected to the sealing portion 700 and fills the mounting hole 111.

Exemplarily, the sealing portion 700 may be sleeved on the electrode terminal base.

It should be noted that after the electrode terminal 200 is inserted into the mounting hole 111, the protruding portion 220 and the second fixing portion 130 work together to press the sealing portion 700, so that the sealing portion 700 is deformed under pressure to achieve a sealing effect.

As can be seen from FIG. 5 and FIG. 5a, most of the electrode terminal 200 is located within the mounting hole 111. When the insulating portion 800 and the sealing portion 710 are connected within the mounting hole 111 and fill the mounting hole 111, a continuous insulating and sealing structure with a certain width (size in the second direction) is formed between the electrode terminal 200 and the inner wall of the mounting hole 111. This portion of the insulating and sealing structure not only has strong structural strength, which can ensure stable and reliable connection between the electrode terminal 200 and the lid 100, but also has insulating properties, which can reliably insulate between the electrode terminal 200 and the lid 100 and also fills the gaps within the mounting hole 111. As such, the electrolyte in the cell cannot leak outward through the mounting hole 111, and the safety of the cell is thus improved.

As shown in FIG. 5, in some embodiments, the insulating portion 800 includes a first sub-portion 810, a second sub-portion 820, and a third sub-portion 830. The second sub-portion 820 is at least partially located between the first fixing portion 120 and the second fixing portion 130, the third sub-portion 830 is at least partially located on the side of the first fixing portion 120 away from the mounting hole 111, and the first sub-portion 810 connects the second sub-portion 820 and the third sub-portion 830. In the first direction, at least the portion of the first sub-portion 810 close to the electrode terminal base 210 does not extend beyond the end portion of the electrode terminal base 210 away from the second surface 113.

Exemplarily, an end surface of the first sub-portion 810 away from the second surface 113 may be an annular flat surface, an annular curved surface, an annular inclined surface, or an annular surface partially formed with recesses or protrusions (the annular surface includes an annular flat surface, an annular curved surface, or an annular inclined surface).

The insulating portion 800 covers at least the free end of the first fixing portion 120 through the first sub-portion 810, the second sub-portion 820, and the third sub-portion 830. On one hand, this may increase the contact area between the insulating portion 800 and the first fixing portion 120, so that the connection reliability between the insulating portion 800 and the first fixing portion 120 is improved. On the other hand, when the electrode terminal 200 is connected to an external circuit, the insulating portion 800 may improve the insulation performance between the first fixing portion 120 and the external circuit, so that the safety performance of the cell is improved.

Further, since the first sub-portion 810 is closest to the top end of the electrode terminal base 210, designing the first sub-portion 810 to not extend beyond the top end of the electrode terminal base 210 may prevent the insulating portion 800 from interfering with the external circuit and ensure that the electrode terminal 200 may form a connection structure with good electrical performance with the external circuit. Further, the insulating portion 800 is prevented from being damaged by heat when the electrode terminal 200 is welded to the external circuit, so that the insulating portion 800 is prevented from failing.

Based on the same inventive concept, in combination with the description of the lid assembly 1000 of the above embodiments, this embodiment provides a cell, and the cell has corresponding technical effects of the lid assembly 1000 of the above embodiments, so description thereof is not repeated in detail herein.

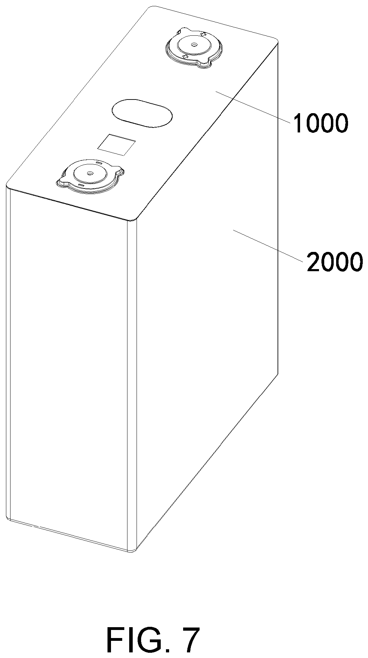

FIG. 7 shows a schematic view of a cell of the second structure.

As shown in FIG. 7 and FIG. 4, the cell includes a housing 2000, an electrode assembly 3000, and the lid assembly 1000 as described in the above embodiments. The lid assembly 1000 is connected to the housing 2000, and the electrode assembly 3000 is disposed in a space enclosed by the lid assembly 1000 and the housing 2000.

It should be noted that the end of the electrode terminal 200 of the lid assembly 1000 close to the electrode assembly 3000 may be exposed in the space where the electrode assembly 3000 is located, so as to facilitate the electrical connection between the electrode terminal 200 and the tabs of the electrode assembly 3000.

## Claims

1. A lid assembly (1000), comprising:
a lid (100), an insulating portion (800), and an electrode terminal (200), wherein the electrode terminal (200) and the lid (100) are connected through the insulating portion (800),
wherein
the lid (100) comprises a lid base (110) and a first fixing portion (120), the lid (100) is provided with a mounting hole (111) penetrating in a first direction (Z), the lid base (110) comprises a first surface (112) and a second surface (113) disposed opposite to each other in the first direction (Z), the first fixing portion (120) extends from the first surface (112) in a direction away from the lid base (110) in the first direction (Z), and the first direction (Z) is a thickness direction of the lid base (110),
the electrode terminal (200) at least partially passes through the mounting hole (111), the electrode terminal (200) comprises an electrode terminal base (210) and a protruding portion (220) disposed circumferentially along an outer wall of the electrode terminal base (210),
at least one of an edge of the protruding portion (220) and the first fixing portion (120) is provided with a thinning structure (900),
the insulating portion (800) is connected at least between the first fixing portion (120) and the protruding portion (220).

2. The lid assembly (1000) according to claim 1, wherein
a gap is provided between projections of the first fixing portion (120) and the protruding portion (220) in the first direction (Z), and
a minimum distance between the edge of the protruding portion (220) and the first fixing portion (120) is L₁,
where L₁ ≥ 0.8 mm.

3. The lid assembly (1000) according to claim 1, wherein
along the first direction (Z), a minimum distance between a first end (1111) and the protruding portion (220) is H₃, where H₃ ≥ 0.8 mm,
along a second direction (X), a minimum distance between the first end (1111) and the protruding portion (220) is L₃, where L₃ ≥ 0.2 mm, and
the second direction (X) is perpendicular to the first direction (Z).

4. The lid assembly (1000) according to claim 1, wherein
the thinning structure (900) comprises a chamfer, a rounded chamfer, or a stepped structure.

5. The lid assembly (1000) according to claim 1, wherein
the thinning structure (900) comprises a first thinning structure (910) disposed at the edge of the protruding portion (220),
the first fixing portion (120) further extends toward a direction of a central axis of the mounting hole (111), and
a free end of the first fixing portion (120) is provided with a second thinning structure (920).

6. The lid assembly (1000) according to claim 5, wherein
the first thinning structure (910) and the second thinning structure (920) are disposed opposite to each other, and
a minimum distance between the first thinning structure (910) and the second thinning structure (920) is L₂,
where L₂ ≥ 0.8 mm.

7. The lid assembly (1000) according to claim 6, wherein
a size of the first thinning structure (910) in the first direction (Z) is H₁,
a size of the protruding portion (220) in the first direction (Z) is H₂, and
a ratio of H₁ to H₂ is 0.2 to 0.8.

8. The lid assembly (1000) according to claim 7, wherein
the lid (100) further comprises a second fixing portion (130),
the second fixing portion (130) extends at least from the second surface (113) toward the direction of the central axis of the mounting hole (111),
along the first direction (Z), the protruding portion (220) is located between the first fixing portion (120) and the second fixing portion (130), and
projections of the protruding portion (220) and the second fixing portion (130) in the first direction (Z) overlap.

9. The lid assembly (1000) according to claim 8, wherein
along the first direction (Z), at least a sealing portion (700) is disposed between the protruding portion (220) and the second fixing portion (130), and
the insulating portion (800) is connected to the sealing portion (700) and fills the mounting hole (111).

10. The lid assembly (1000) according to claim 8, wherein
the insulating portion (800) comprises a first sub-portion (810), a second sub-portion (820), and a third sub-portion (830),
the second sub-portion (820) is at least partially located between the first fixing portion (120) and the second fixing portion (130),
the third sub-portion (830) is at least partially located on a side of the first fixing portion (810) away from the mounting hole (111), and
the first sub-portion (810) connects the second sub-portion (820) and the third sub-portion (830),
along the first direction (Z), at least a portion of the first sub-portion (810) close to the electrode terminal base (210) does not extend beyond an end portion of the electrode terminal base (210) away from the second surface (113).

11. A cell, comprising:
a housing (2000);
an electrode assembly (3000); and
the lid assembly (1000) according to any one of claims 1 to 10,
wherein
the lid assembly (1000) is connected to the housing (2000), and
the electrode assembly (3000) is disposed in a space enclosed by the lid assembly (1000) and the housing (2000).
